# EUROPÄISCHE PATENTANMELDUNG

(11) **EP 3 926 442 A1**
(43) Veröffentlichungstag der Anmeldung: **22.12.2021**
(21) Anmeldenummer: 20181006.6
(22) Anmeldetag: 19.06.2020
(51) Int. Cl.: G06F 3/01, H04N 7/15, H04M 3/56

(54) **VIDEOKONFERENZVERFAHREN UND VIDEOKONFERENZSYSTEM**

(71) Anmelder: Brainbox GmbH, 75172 Pforzheim (DE)
(72) Erfinder: KRAUS, Carsten, 75173 Pforzheim (DE)
(74) Vertreter: Reitstötter Kinzebach

(57) **Zusammenfassung**

Die Erfindung betrifft ein Videokonferenzverfahren, bei dem mit einer ersten Videokonferenzeinrichtung 2 erste Videobilddaten mittels einer ersten Anzeigevorrichtung 3 wiedergegeben werden und von einer ersten Bildaufnahmevorrichtung 4 zumindest ein die Augen umfassender Bereich des Kopfes eines ersten Nutzers 5 in einer Position aufgenommen wird, bei welcher der erste Nutzer die von der ersten Anzeigevorrichtung 3 wiedergegebenen Videobilddaten betrachtet, wobei die von der ersten Anzeigevorrichtung 3 wiedergegebenen Videobilddaten zumindest eine Darstellung der Augen eines zweiten Nutzers 9 umfassen, die von einer zweiten Bildaufnahmevorrichtung 8 einer zweiten Videokonferenzeinrichtung 6 aufgenommen werden, die entfernt von der ersten Videokonferenzeinrichtung 2 angeordnet ist; von einer Verarbeitungseinheit 14 die von der ersten Bildaufnahmevorrichtung 3 aufgenommenen Videobilddaten zumindest des die Augen umfassenden Bereichs des Kopfes des ersten Nutzers 5 empfangen und verändert werden und die veränderten Videobilddaten an eine zweite Anzeigevorrichtung 8 der zweiten Videokonferenzeinrichtung 6 übertragen und von dieser wiedergegeben werden. Das erfindungsgemäße Verfahren ist dadurch gekennzeichnet, dass bei der Verarbeitung der Videobilddaten die Blickrichtung 16 des ersten Nutzers 5 erfasst wird und in den Videobilddaten zumindest die Wiedergabe des die Augen umfassenden Bereichs des Kopfes des ersten Nutzers so verändert wird, dass eine Ziel-Blickrichtung des in den veränderten Videobilddaten dargestellten ersten Nutzers 5 so erscheint, als wäre die erste Bildaufnahmevorrichtung 3 auf einer Geraden 18 angeordnet, die durch einen ersten Umgebungsbereich der Augen des ersten Nutzers und durch einen zweiten Umgebungsbereich der auf der ersten Anzeigevorrichtung 4 dargestellten Augen des zweiten Nutzers 9 geht. Ferner betrifft die Erfindung ein entsprechendes Videokonferenzsystem.

## Beschreibung

Die vorliegende Erfindung betrifft ein Videokonferenzverfahren mit einer ersten und einer zweiten Videokonferenzeinrichtung. Bei jeder Videokonferenzeinrichtung werden Videobilder eines Nutzers aufgenommen, an die andere, entfernt angeordnete Videokonferenzeinrichtung übertragen und dort von einer Anzeigevorrichtung angezeigt. Ferner betrifft die Erfindung ein Videokonferenzsystem, das eine erste Videokonferenzeinrichtung mit einer ersten Anzeigevorrichtung und einer ersten Bildaufnahmevorrichtung sowie eine zweite Videokonferenzeinrichtung mit einer zweiten Anzeigevorrichtung und einer zweiten Bildaufnahmevorrichtung aufweist.

Bei einer Videokonferenz ergibt sich das Problem, dass sich kein direkter Blickkontakt zwischen den Nutzern ergibt. Hierin unterscheidet sich die Situation der Videokonferenz von einer Situation, bei der sich die beiden Nutzer direkt gegenübersitzen. Wenn nämlich der erste Nutzer die Darstellung des zweiten Nutzers auf seiner Anzeigevorrichtung betrachtet, blickt der erste Nutzer nicht in die Bildaufnahmevorrichtung, so dass bei der Darstellung des ersten Nutzers bei der Anzeigevorrichtung des zweiten Nutzers dieser erste Nutzer so dargestellt wird, dass er nicht in die Augen des zweiten Nutzers blickt. Wenn der erste Nutzer umgekehrt in die Bildaufnahmevorrichtung blickt, so dass sich bei der Darstellung des ersten Nutzers auf der Anzeigevorrichtung des zweiten Nutzers ein Blickkontakt zwischen den Nutzern ergibt, kann der erste Nutzer auf seiner Anzeigevorrichtung die Darstellung des zweiten Nutzers nur peripher erfassen.

Um einen Blickkontakt der Nutzer bei einer Videokonferenz zu ermöglichen, schlägt die EP 0 970 584 B1 vor, Kameras in Öffnungen des Bildschirms anzuordnen. Ferner wird vorgeschlagen, mit zwei Kameras jeweils Teilaufnahmen eines Raums aufzunehmen. Diese Teilaufnahmen werden in einer Videoverarbeitungseinheit aneinandergefügt, um auf einem Bildschirm aus den von beiden Kameras stammenden Signalen ein einziges Bild herzustellen.

In ähnlicher Weise beschreibt die US 7,515,174 B1 ein Videokonferenzsystem, bei dem der Blickkontakt der Nutzer dadurch hergestellt wird, dass mehrere Kameras verwendet werden, deren Bildströme einander überlagert werden.

Des Weiteren beschreibt die US 8,908,008 B2 ein Verfahren, bei dem Bilder des ersten Nutzers mittels einer Kamera durch ein Display hindurch aufgenommen werden, wobei das Display zwischen dem ersten Nutzer und der Kamera angeordnet ist. Von dem Display wird ein Bildstrom des zweiten Nutzers empfangen. Dabei werden die Bilder des zweiten Nutzers so verschoben, dass die Darstellung des Gesichts des zweiten Nutzers mit den Augen des ersten Nutzers und dem Objektiv der Kamera ausgerichtet ist.

Nachteilig an bekannten Videokonferenzverfahren und Videokonferenzsystemen ist, dass der gegenseitige Blickkontakt der Nutzer nur mit einem großen Hardwareaufwand bereitgestellt werden kann. Entweder sind mehrere Kameras zur Aufnahme eines Nutzers vorgesehen oder es werden besondere Anforderungen an die Anzeigevorrichtung gestellt, so dass z. B. durch die Anzeigevorrichtung hindurch Videobilder des Nutzers aufgenommen werden können.

Erfindungsgemäß wird diese Aufgabe durch ein Videokonferenzverfahren mit den Merkmalen des Anspruchs 1 und ein Videokonferenzsystem mit den Merkmalen des Anspruchs 15 gelöst. Vorteilhafte Ausgestaltungen und Weiterbildungen ergeben sich aus den abhängigen Ansprüchen.

Dementsprechend werden bei dem erfindungsgemäßen Videokonferenzverfahren mit einer ersten Videokonferenzeinrichtung erste Videobilddaten mittels einer ersten Anzeigevorrichtung wiedergegeben und von einer ersten Bildaufnahmevorrichtung zumindest ein die Augen umfassender Bereich des Kopfes eines ersten Nutzers in einer Position aufgenommen, bei welcher der erste Nutzer die von der ersten Anzeigevorrichtung wiedergegebenen Videobilddaten betrachtet. Dabei umfassen die von der ersten Anzeigevorrichtung wiedergegebenen Videobilddaten zumindest eine Darstellung der Augen eines zweiten Nutzers, die von einer zweiten Bildaufnahmevorrichtung einer zweiten Videokonferenzeinrichtung aufgenommen werden, die entfernt von der ersten Videokonferenzeinrichtung angeordnet ist. Von einer Verarbeitungseinheit werden die von der ersten Bildaufnahmevorrichtung aufgenommenen Videobilddaten zumindest des die Augen umfassenden Bereichs des Kopfes des ersten Nutzers empfangen und verändert. Die veränderten Videobilddaten werden an eine zweite Anzeigevorrichtung einer zweiten Videokonferenzeinrichtung übertragen und von dieser wiedergegeben. Bei dem erfindungsgemäßen Videokonferenzverfahren wird bei der Verarbeitung der Videobilddaten die Blickrichtung des ersten Nutzers erfasst. In den Videobilddaten wird dann zumindest die Wiedergabe des die Augen umfassenden Bereichs des Kopfes so verändert, dass eine Ziel-Blickrichtung des in den veränderten Videobilddaten dargestellten ersten Nutzers so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht.

Der erste bzw. zweite Umgebungsbereich beinhaltet insbesondere die dargestellten Augen des ersten bzw. zweiten Nutzers. Der erste bzw. zweite Umgebungsbereich kann beispielsweise die Strecke von dem ersten dargestellten Auge zu dem zweiten dargestellten Auge des ersten bzw. zweiten Nutzers sein. Der Umgebungsbereich kann dabei auch Bereiche rechts und links sowie oberhalb und unterhalb dieser Strecke beinhalten.

Das erfindungsgemäße Videokonferenzverfahren kann vorteilhafterweise mit einer Hardware eines herkömmlichen Videokonferenzsystems ausgeführt werden. Es kann somit insbesondere rein softwareseitig ausgeführt werden, indem Daten von der entsprechenden Bildaufnahmevorrichtung empfangen werden und Daten an die entsprechende Anzeigevorrichtung übertragen werden. Erfindungsgemäß wird dazu die erste Bildaufnahmevorrichtung rein softwareseitig virtuell in eine andere Perspektive verschoben. Dies geschieht, indem aus dem von der realen Bildaufnahmevorrichtung erfassten Videobild, insbesondere mittels Verfahren der künstlichen Intelligenz, ein fiktives, aber der Realität nahekommendes Videobild erzeugt wird, das dem Bild nahekommt, welches die Bildaufnahmevorrichtung sehen würde, wenn sie nahe der Darstellung der Augen des zweiten Nutzers eingebaut wäre.

Durch die Veränderung der Videobilddaten, welche zumindest die Augen des Nutzers wiedergeben, wird jedoch ein verändertes Videobild erzeugt, bei dem der erste Nutzer eine Ziel-Blickrichtung hat, welche auf die erste Bildaufnahmevorrichtung gerichtet ist, obwohl er tatsächlich nicht in die erste Bildaufnahmevorrichtung blickt, sondern z. B. auf eine Anzeige auf der ersten Anzeigevorrichtung. Für den zweiten Nutzer erscheint die Wiedergabe der veränderten Videobilddaten des ersten Nutzers auf der zweiten Anzeigevorrichtung dann so, dass die Blickrichtung des ersten Nutzers so erscheint, als würde er dem zweiten Nutzer gegenübersitzen. Blickt der erste Nutzer in die auf der ersten Anzeigevorrichtung dargestellten Augen des zweiten Nutzers, so ergibt sich ein direkter Blickkontakt bei der Wiedergabe der veränderten Videobilddaten des ersten Nutzers auf der zweiten Anzeigevorrichtung. Betrachtet der erste Nutzer einen anderen Bereich der Darstellung auf der ersten Anzeigevorrichtung, so ist bei der Darstellung der veränderten Videobilddaten die Blickrichtung des ersten Nutzers, wie sie von der zweiten Anzeigevorrichtung dargestellt wird, in gleicher Weise von dem zweiten Nutzer abgewandt, wie es erscheinen würde, wenn der erste Nutzer dem zweiten Nutzer gegenübersitzen würde. Auf diese Weise kann mit geringem Hardwareaufwand, der nur in der Verarbeitungseinheit liegt, ein Videokonferenzverfahren bereitgestellt werden, welches für den zweiten Nutzer den Eindruck erweckt, als würde der erste Nutzer ihm real gegenübersitzen.

Dabei wird insbesondere ein direkter Blickkontakt hergestellt, wenn der erste Nutzer in die Darstellung der Augen des zweiten Nutzers auf der ersten Anzeigevorrichtung blickt.

In den Videobilddaten wird insbesondere die Wiedergabe des die Augen umfassenden Bereichs des Kopfes des ersten Nutzers so verändert, dass die Ziel-Blickrichtung des ersten Nutzers in den veränderten Videobilddaten so erscheint, als wäre die erste Bildaufnahmevorrichtung auf einer Geraden angeordnet, die durch eines der Augen des ersten Nutzers und durch eines der auf der ersten Anzeigevorrichtung dargestellten Augen des zweiten Nutzers geht. Die Videobilddaten werden insbesondere so verändert, dass die Ziel-Blickrichtung des ersten Nutzers in den veränderten Videobilddaten so erscheint, als wäre die erste Bildaufnahmevorrichtung auf dieser Geraden hinter oder bei einem der auf der ersten Anzeigevorrichtung dargestellten Augen des zweiten Nutzers angeordnet. Auf diese Weise kann die Ziel-Blickrichtung des ersten Nutzers in den veränderten Videobilddaten noch realistischer den Eindruck vermitteln, als sitze der erste Nutzer dem zweiten Nutzer gegenüber.

Gemäß einer Weiterbildung des erfindungsgemäßen Videokonferenzverfahrens wird mittels der erfassten Blickrichtung des ersten Nutzers bestimmt, ob der erste Nutzer einen Punkt der ersten Anzeigevorrichtung betrachtet, und, wenn bestimmt wurde, dass ein Punkt der ersten Anzeigevorrichtung betrachtet wird, wird ermittelt, welches Objekt aktuell bei diesem Punkt von der ersten Anzeigevorrichtung dargestellt wird. Auf diese Weise kann insbesondere unterschieden werden, ob der erste Nutzer ein Gesicht betrachtet, welches von der ersten Anzeigevorrichtung wiedergegeben wird, oder ob der erste Nutzer ein anderes Objekt, welches von der ersten Anzeigevorrichtung dargestellt wird, betrachtet.

Wenn ermittelt worden ist, dass das Objekt die Darstellung des Gesichts des zweiten Nutzers ist, erscheint bei der Verarbeitung der Videobilddaten die Ziel-Blickrichtung des in den veränderten Videobilddaten dargestellten ersten Nutzers so, dass der erste Nutzer das auf der ersten Bildaufnahmevorrichtung dargestellte Gesicht des zweiten Nutzers betrachtet. Wenn das dargestellte Bild des zweiten Nutzers ausreichend groß ist, kann insbesondere in der Ziel-Blickrichtung unterschieden werden, wohin im dargestellten Gesicht des zweiten Nutzers der zweite Nutzer blickt. Dabei kann die Position der Augen, der Nase und/oder des Mundes bei der Darstellung des zweiten Nutzers mittels an sich bekannter Objekterkennungsverfahren ermittelt werden. Die Ziel-Blickrichtung des ersten Nutzers ist in den veränderten Videobilddaten dann so ausgerichtet, dass der erste Nutzer den jeweiligen Bereich des dargestellten Gesichtes des zweiten Nutzers betrachtet.

Gemäß einer anderen Ausgestaltung des erfindungsgemäßen Videokonferenzverfahrens erscheint bei der Verarbeitung der Videobilddaten die Ziel-Blickrichtung des in den veränderten Videobilddaten dargestellten ersten Nutzers so, dass der erste Nutzer ein auf der ersten Anzeigevorrichtung dargestelltes Auge des zweiten Nutzers betrachtet, wenn ermittelt worden ist, dass das Objekt die Darstellung des Gesichts des zweiten Nutzers ist, jedoch nicht ermittelt wurde, welcher Bereich der Darstellung des Gesichts betrachtet wird. In diesem Fall wird somit ein direkter Blickkontakt durch die veränderten Videobilddaten hergestellt, wenn der erste Nutzer das dargestellte Gesicht des zweiten Nutzers auf der ersten Anzeigevorrichtung betrachtet.

Gemäß einer Weiterbildung des erfindungsgemäßen Videokonferenzverfahrens umfassen die von der ersten Anzeigevorrichtung wiedergegebenen Videobilddaten zumindest eine Darstellung der Augen mehrerer zweiter Nutzer, die von der zweiten Bildaufnahmevorrichtung und/oder weiteren zweiten Bildaufnahmevorrichtungen aufgenommen werden. In diesem Fall wird ermittelt, ob das Objekt die Darstellung des Gesichts eines bestimmten der mehreren zweiten Nutzer ist. Bei der Verarbeitung der Videobilddaten erscheint die Ziel-Blickrichtung des in den veränderten Videobilddaten dargestellten ersten Nutzers dann so, als wäre die erste Bildaufnahmevorrichtung auf der Geraden angeordnet, die durch einen ersten Umgebungsbereich der Augen des ersten Nutzers und durch einen zweiten Umgebungsbereich der auf der ersten Anzeigevorrichtung dargestellten Augen des bestimmten der mehreren zweiten Nutzer geht.

Diese Weiterbildung des erfindungsgemäßen Videokonferenzverfahrens umfasst die Konstellation, bei der mehrere Nutzer bei der zweiten Videokonferenzeinrichtung an der Videokonferenz teilnehmen, wobei die zweiten Nutzer von derselben Bildaufnahmevorrichtung aufgenommen werden oder gegebenenfalls an verschiedenen Orten von jeweils separaten Bildaufnahmevorrichtungen aufgenommen werden. Die Ziel-Blickrichtung des ersten Nutzers ist dann in den veränderten Videobilddaten so ausgebildet, dass der auf der ersten Anzeigevorrichtung angeschaute zweite Nutzer auf seiner zweiten Anzeigevorrichtung sieht, dass er von dem ersten Nutzer angeschaut wird. Die anderen zweiten Nutzer hingegen sehen auf ihren zweiten Anzeigevorrichtungen, dass sie nicht angeschaut werden.

Es gibt verschiedene Möglichkeiten, die Videobilddaten zu verändern und die Blickrichtung des ersten Nutzers in den veränderten Videobilddaten so anzupassen, dass sie der gewünschten Ziel-Blickrichtung entsprechen. Beispielsweise können bei der Bearbeitung der Videobilddaten die veränderten Videobilddaten durch ein Verfahren der künstlichen Intelligenz erzeugt werden.

Hierbei kann insbesondere ein so genanntes *Generative Adversarial Network* (GAN) oder ein daraus weiterentwickeltes Verfahren eingesetzt werden.

Gemäß einer Ausgestaltung des erfindungsgemäßen Videokonferenzverfahrens werden dementsprechend bei der Verarbeitung der Videobilddaten die veränderten Videobilddaten durch ein Generative Adversarial Network (GAN) mit einem Generator-Netzwerk und einem Diskriminator-Netzwerk erzeugt. Dabei erzeugt das Generator-Netzwerk geänderte Videobilddaten. Das Diskriminator-Netzwerk bewertet eine Ähnlichkeit zwischen der Darstellung des Kopfes des ersten Nutzers in den geänderten Videobilddaten und den aufgenommenen Videobilddaten. Ferner bewertet das Diskriminator-Netzwerk eine Übereinstimmung zwischen der Blickrichtung des ersten Nutzers in den geänderten Videobilddaten und der Ziel-Blickrichtung. Durch iterative Schritte können auf diese Weise insbesondere geänderte Videobilddaten erzeugt werden, welche eine Darstellung des ersten Nutzers enthalten, die dem ersten Nutzer sehr ähnlich ist, wobei jedoch die aufgenommene Blickrichtung in die Ziel-Blickrichtung geändert wurde. Es hat sich herausgestellt, dass bei der Verwendung eines Generative Adversarial Network geänderte Videobilddaten erzeugt werden können, welche eine realitätsnahe Darstellung des Kopfes des ersten Nutzers enthalten, wobei sich die Blickrichtung der Darstellung des ersten Nutzers in den geänderten Videobilddaten so in die Darstellung des Kopfes einfügt, dass die Darstellung des Kopfes des ersten Nutzers weiterhin realitätsnah ist. Es ergeben sich insbesondere keine Artefakte beim Übergang des unmittelbar die Augen umfassenden Bereichs, welcher insbesondere die Ziel-Blickrichtung bestimmt, in sich anschließende Bereiche der Darstellung des Kopfes.

Gemäß einer Weiterbildung des erfindungsgemäßen Videokonferenzverfahrens werden mittels der Verarbeitungseinheit die von der ersten Bildaufnahmevorrichtung aufgenommenen Videobilddaten, welche zumindest eine Darstellung des Kopfes des ersten Nutzers umfassen, so analysiert, dass ein Gefühlsausdruck des ersten Nutzers erfasst und einer oder mehreren Gefühlsausdruck-Klasse(n) zugeordnet wird. Das Diskriminator-Netzwerk bewertet in diesem Fall ferner eine Übereinstimmung zwischen der Gefühlsausdruck-Klasse bzw. den Gefühlsausdruck-Klassen der Darstellung des Kopfes des ersten Nutzers in den veränderten Videobilddaten und der zugeordneten Gefühlsausdruck-Klasse bzw. den Gefühlsausdruck-Klassen der Darstellung des Kopfes des ersten Nutzers in den aufgenommenen Videobilddaten. Auf diese Weise kann erreicht werden, dass das Generative Adversarial Network nicht nur eine Ähnlichkeit der Darstellung des Kopfes des ersten Nutzers erhält, sondern auch den Gefühlsausdruck der Darstellung des ersten Nutzers unverändert lässt. Beispielsweise kann die Verarbeitungseinheit ein Lächeln, ein Grinsen und/oder ein trauriges Gesicht des ersten Nutzers unterschiedlichen Gefühlsausdruck-Klassen zuordnen. Das Diskriminator-Netzwerk stellt dann sicher, dass auch in den veränderten Videobilddaten die Darstellung des Kopfes des ersten Nutzers ein Lächeln, ein Grinsen bzw. ein trauriges Gesicht zeigt.

Bei einer Videokonferenz ist nicht nur der Blickkontakt zwischen den Nutzern von besonderer Bedeutung, sondern auch die Gestik, die Mimik und der Gefühlsausdruck, der z. B. durch einen Gesichtsausdruck des jeweiligen Nutzers bestimmt wird. Der durch den Gesichtsausdruck vermittelte Gefühlsausdruck des ersten Nutzers wird bei der Verarbeitung der Videobilddaten bei dieser Weiterbildung des erfindungsgemäßen Videokonferenzverfahrens beibehalten, so dass die Konversation der Nutzer durch die Veränderung der Videobilddaten des ersten Nutzers nicht beeinträchtigt wird.

Gemäß einer anderen Ausgestaltung des erfindungsgemäßen Videokonferenzverfahrens wird bei der Verarbeitung der Videobilddaten ein Blickrichtungsbereich, der die Augen des ersten Nutzers wiedergibt, aus einem Restbereich extrahiert, wodurch Videobildteildaten erzeugt werden. Dieser Blickrichtungsbereich wird in den Videobildteildaten danach so verändert, dass die von der Darstellung der Augen vorgegebene Blickrichtung des ersten Nutzers in den veränderten Videobildteildaten dieses Blickrichtungsbereichs so erscheint, als wäre die erste Bildaufnahmevorrichtung auf der Geraden angeordnet. Dann werden die veränderten Videobildteildaten des Blickrichtungsbereichs wieder in den Restbereich der Videobilddaten eingesetzt, wodurch die veränderten Videobilddaten erzeugt werden. Vorteilhafterweise wird durch diese Ausgestaltung des Videokonferenzverfahrens sichergestellt, dass ein Restbereich außerhalb des Blickrichtungsbereichs bei den veränderten Videobilddaten unverändert bleibt. Hierdurch kann auf andere Weise sichergestellt werden, dass der Gesichtsausdruck bzw. der Gefühlsausdruck des ersten Nutzers bei den veränderten Videobilddaten erhalten bleibt und nur die Blickrichtung verändert wird.

Der Blickrichtungsbereich der Videobilddaten kann insbesondere in einen ersten Teilbereich, der die Darstellung eines ersten Auges des ersten Nutzers umfasst, und einen zweiten Teilbereich, die die Darstellung eines zweiten Auges des ersten Nutzers umfasst, unterteilt sein.

Gemäß einer anderen Ausgestaltung umfasst der Blickrichtungsbereich der Videobilddaten die Darstellung eines Kopfes des ersten Nutzers. Der Restbereich umfasst dann einen Hintergrund der Darstellung des Kopfes. In diesem Fall wird die Blickrichtung der Darstellung des ersten Nutzers durch eine Veränderung der Darstellung des Kopfes des ersten Nutzers verändert.

Beispielsweise kann die Darstellung des Kopfes gedreht werden, um die Blickrichtung der Darstellung des ersten Nutzers zu verändern.

Gemäß einer Weiterbildung des erfindungsgemäßen Videokonferenzverfahrens werden initial mehrere Bilder des ersten Nutzers aufgenommen und gespeichert, bei denen der Blickrichtungsbereich des ersten Nutzers verschiedene Blickrichtungen definiert, ohne dass die Pose des Kopfes des ersten Nutzers verändert wird. Die durch die Verarbeitung der Videobilddaten zu erzeugende veränderte Ziel-Blickrichtung des ersten Nutzers wird in diesem Fall mit den Blickrichtungen der gespeicherten Bilder verglichen. Es wird dann ein Bild ausgewählt, bei welchem die Blickrichtung der zu erzeugenden veränderten Ziel-Blickrichtung des ersten Nutzers am nächsten kommt. Bei der Verarbeitung der Videobilddaten wird das ausgewählte Bild verwendet, um die veränderten Videobildteildaten und/oder Videobilddaten zu erzeugen. Auf diese Weise kann eine sehr realitätsnahe Darstellung des ersten Nutzers in den veränderten Videobilddaten erzeugt werden, da die veränderten Videobilddaten einem Bild entsprechen, welches initial von dem ersten Nutzer aufgenommen und gespeichert wurde.

In entsprechender Weise können auch verschiedene Gesichtsausdrücke oder Gefühlsausdrücke des ersten Nutzers initial aufgenommen und gespeichert werden. Bei der Auswahl des Bildes wird dann nicht nur berücksichtigt, dass die Blickrichtung in der Darstellung des ersten Nutzers in dem Bild der Ziel-Blickrichtung entspricht, sondern dass auch die Gesichtsausdrücke bzw. Gefühlsausdrücke in der aufgenommenen Darstellung des ersten Nutzers und dem Bild übereinstimmen.

Die initiale Aufnahme der Bilder des ersten Nutzers kann beispielsweise dadurch erfolgen, dass der erste Nutzer verschiedene Punkte auf der ersten Anzeigevorrichtung betrachtet. Dabei wird die Blickrichtung des ersten Nutzers erfasst und gemeinsam mit den aufgenommenen Bildern gespeichert.

Gemäß einer Weiterbildung des erfindungsgemäßen Videokonferenzverfahrens können die veränderten Videobildteildaten des Blickrichtungsbereichs wieder in den Restbereich der Videobilddaten so eingesetzt werden, dass die veränderten Videobilddaten durch Verfahren der künstlichen Intelligenz so erzeugt werden, dass sich ein für die menschliche Wahrnehmung natürliches Bild ergibt. Dabei kann wiederum ein Generative Adversarial Network eingesetzt werden.

Gemäß einer weiteren Ausgestaltung des erfindungsgemäßen Videokonferenzverfahrens ist der Blickrichtungsbereichs in eine Randzone, eine Augenzone, welche die Darstellung der Iris einschließlich der Pupille zumindest eines der Augen des ersten Nutzers umfasst, und eine Übergangszone zwischen der Randzone und der Augenzone unterteilt. Bei der Verarbeitung der Videobilddaten wird der Blickrichtungsbereich dann so verändert, dass die Augenzone so verändert wird, dass die Ziel-Blickrichtung der Darstellung des ersten Nutzers in den veränderten Videobilddaten der Augenzone so erscheint, als wäre die erste Bildaufnahmevorrichtung auf der Geraden angeordnet, die Darstellung in der Randzone nahtlos an die Darstellung benachbarter Bereiche des Restbereichs anschließt und in der Übergangszone die Videobilddaten so verändert werden, dass sich ein Übergang von der veränderten Darstellung in der Augenzone zu der Darstellung in der Randzone ergibt. Auf diese Weise kann ein natürliches Erscheinungsbild der Darstellung des ersten Nutzers mit der Ziel-Blickrichtung erzeugt werden.

Gemäß einer Weiterbildung des erfindungsgemäßen Videokonferenzverfahrens werden von der ersten Bildaufnahmevorrichtung aufeinanderfolgende Videoframes aufgenommen und zumindest temporär gespeichert. Bei der Verarbeitung der Videobilddaten werden dann fehlende Bildelemente des Restbereichs aus gespeicherten Videoframes übernommen. Alternativ können die fehlenden Bildelemente des Restbereichs synthetisiert werden, beispielsweise durch Verfahren der künstlichen Intelligenz. Bei der Änderung der Blickrichtung bei der Darstellung des ersten Nutzers können Bildteile sichtbar werden, welche bei der aufgenommenen Darstellung des ersten Nutzers nicht sichtbar waren. Solche fehlenden Bildbereiche müssen ergänzt werden, um weiterhin eine realistische Darstellung zu erreichen. Diese Ergänzungen können vorteilhafterweise zuvor gespeicherten Videoframes entnommen werden oder sie können synthetisiert werden.

Gemäß einer anderen Ausgestaltung des erfindungsgemäßen Videokonferenzverfahrens werden von der ersten Bildaufnahmevorrichtung aufeinanderfolgende Videoframes aufgenommen und bei einer Blickrichtungsänderung des ersten Nutzers werden bei der Verarbeitung der Videobilddaten einige Videoframes so interpoliert, dass die von den veränderten Videobilddaten wiedergegebene Blickrichtungsänderung verlangsamt ist. Insbesondere bei einem Gespräch mit mehreren Gesprächspartnern können Blickrichtungsänderungen zu plötzlich erscheinen, wenn zum Beispiel der Kopf gedreht wird. Um eine solche Bewegung bei einer Blickrichtungsänderung natürlich wirken zu lassen, können einige Videoframes interpoliert werden, wodurch die Bewegung bei der Blickrichtungsänderung verlangsamt dargestellt wird.

Wie bei herkömmlichen Videokonferenzverfahren werden die veränderten Videobilddaten von der zweiten Anzeigevorrichtung in Echtzeit oder nahezu in Echtzeit wiedergegeben. Es kann sich nur eine geringfügige Latenz ergeben, welche durch die Übertragung und Verarbeitung der Videobilddaten an die jeweils andere Videokonferenzeinrichtung verursacht wird.

Des Weiteren werden bei dem Videokonferenzverfahren insbesondere nicht nur die von der ersten Bildaufnahmevorrichtung aufgenommenen Videobilddaten zur Darstellung auf der zweiten Anzeigevorrichtung so verarbeitet, dass sich die Blickrichtung bei der Darstellung des ersten Nutzers verändert, sondern es werden gleichermaßen die von der zweiten Bildaufnahmevorrichtung aufgenommenen Videobilddaten des zweiten Nutzers entsprechend für die Wiedergabe auf der ersten Anzeigevorrichtung geändert. Auf diese Weise ergibt sich bei den jeweiligen Darstellungen auf den beiden Anzeigevorrichtungen eine sehr realitätsnahe Darstellung des jeweils anderen Nutzers insbesondere hinsichtlich seiner Blickrichtung und optional auch hinsichtlich seines Gefühlsausdrucks bzw. Gesichtsausdrucks.

Das erfindungsgemäße Videokonferenzsystem umfasst eine erste Videokonferenzeinrichtung, die eine erste Anzeigevorrichtung und eine erste Bildaufnahmevorrichtung aufweist, wobei die erste Bildaufnahmevorrichtung angeordnet ist, zumindest einen die Augen umfassenden Bereich des Kopfes eines ersten Nutzers in einer Position aufzunehmen, bei welcher der erste Nutzer die von der ersten Anzeigevorrichtung wiedergegebenen Videobilddaten betrachtet. Ferner umfasst das Videokonferenzsystem eine zweite Videokonferenzeinrichtung, die entfernt von der ersten Videokonferenzeinrichtung angeordnet ist, die datentechnisch mit der ersten Videokonferenzeinrichtung gekoppelt ist und die eine zweite Anzeigevorrichtung zur Wiedergabe von Videobilddaten aufweist, die von der ersten Bildaufnahmevorrichtung aufgenommen werden. Des Weiteren umfasst das Videokonferenzsystem eine Verarbeitungseinheit, welche mit der ersten Bildaufnahmevorrichtung gekoppelt ist und welche ausgebildet ist, die von der ersten Bildaufnahmevorrichtung aufgenommenen Videobilddaten zu empfangen und zu verarbeiten und die verarbeiteten Videobilddaten an die zweite Anzeigevorrichtung der zweiten Videokonferenzeinrichtung zu übertragen. Bei dem erfindungsgemäßen Videokonferenzsystem ist die Verarbeitungseinheit ausgebildet, bei der Verarbeitung der Videobilddaten die Blickrichtung des dargestellten ersten Nutzers zu erfassen, in den Videobilddaten zumindest die Wiedergabe des die Augen umfassenden Bereichs des Kopfes des ersten Nutzers so zu verändern, dass die Ziel-Blickrichtung des ersten Nutzers in den veränderten Videobilddaten so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht.

Das erfindungsgemäße Videokonferenzsystem ist insbesondere ausgebildet, das vorstehend beschriebene Videokonferenzverfahren auszuführen. Es weist somit dieselben Vorteile auf.

Des Weiteren betrifft die Erfindung ein Computerprogrammprodukt, umfassend Befehle, die bei der Ausführung des Programms durch einen Computer diesen veranlassen, das vorstehend beschriebene Verfahren auszuführen, der ersten und zweiten Videokonferenzeinrichtung.

Im Folgenden werden Ausführungsbeispiele der Erfindung mit Bezug zu den Zeichnungen erläutert:
- Fig. 1: zeigt den Aufbau eines Ausführungsbeispiels des erfindungsgemäßen Videokonferenzsystems,
- Fig. 2: veranschaulicht die Geometrie der Blickrichtung des ersten Nutzers,

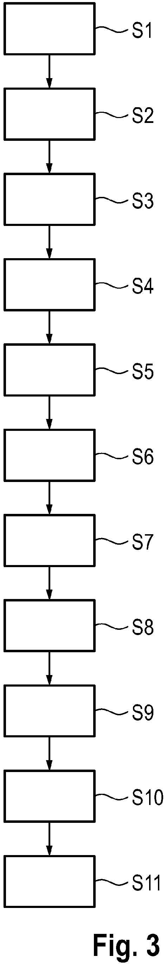

- Fig. 3: zeigt den Ablauf eines ersten Ausführungsbeispiels des erfindungsgemäßen Verfahrens,
- Fig. 4: zeigt eine erste Aufteilung aufgenommener Videobilddaten,
- Fig. 5: zeigt eine zweite Aufteilung aufgenommener Videobilddaten,
- Fig. 6: zeigt eine Aufteilung eines Blickrichtungsbereichs und

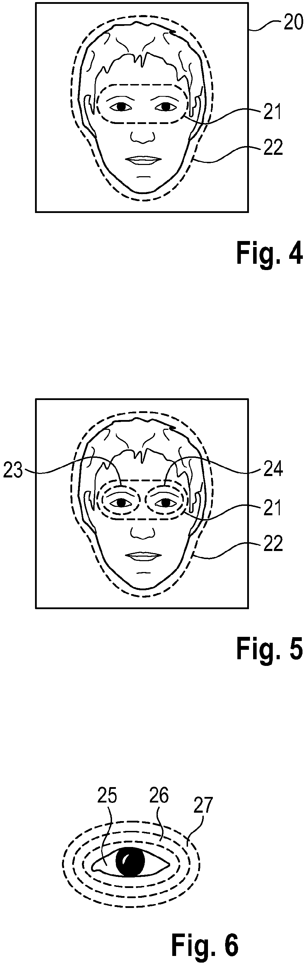

- Fig. 6: zeigt den Ablauf eines zweiten Ausführungsbeispiels des erfindungsgemäßen Verfahrens.

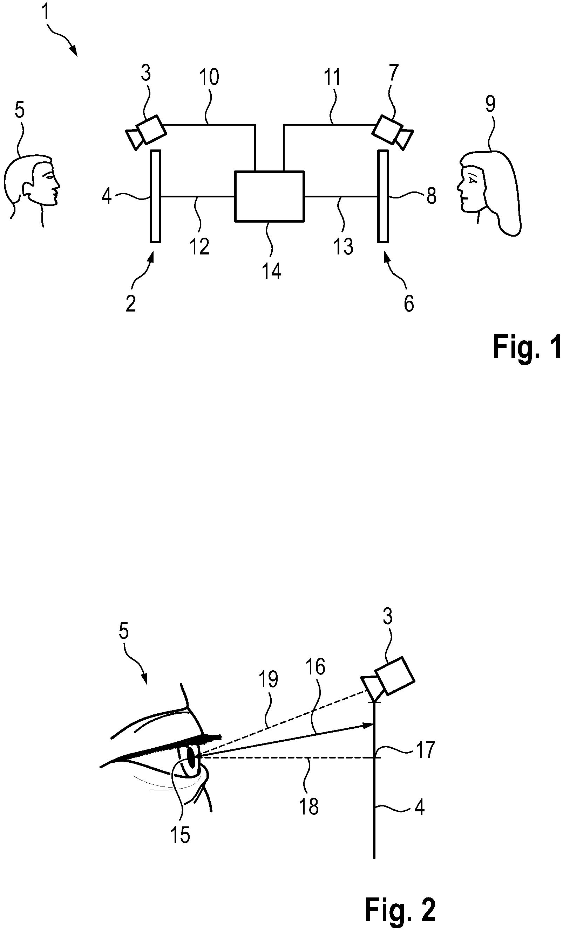

Mit Bezug zu den Figuren 1 und 2 wird das Ausführungsbeispiel des erfindungsgemäßen Videokonferenzsystems 1 erläutert:
Das Videokonferenzsystem 1 umfasst eine erste Videokonferenzeinrichtung 2 mit einer ersten Bildaufnahmevorrichtung 3, beispielsweise einer ersten Kamera, und einer ersten Anzeigevorrichtung 4, beispielsweise einem Display mit einer Anzeigefläche. In Aufnahmerichtung der ersten Bildaufnahmevorrichtung 3 befindet sich ein erster Nutzer 5, welcher die Wiedergabe der ersten Anzeigevorrichtung 4 betrachten kann, während er von der ersten Bildaufnahmevorrichtung 3 aufgenommen wird. Bei dem Ausführungsbeispiel wird zumindest der Kopf des ersten Nutzers 5 von der ersten Bildaufnahmevorrichtung 3 aufgenommen.

Entfernt der ersten Videokonferenzeinrichtung 2 ist eine entsprechende zweite Videokonferenzeinrichtung 6 angeordnet. Diese umfasst eine zweite Bildaufnahmevorrichtung 7, die auch als Kamera ausgebildet sein kann, und eine zweite Anzeigevorrichtung 8, beispielsweise ein Display mit einer Anzeigefläche. Vor der zweiten Videokonferenzeinrichtung 6 befindet sich ein zweiter Nutzer 9, welcher von der zweiten Bildaufnahmevorrichtung 7 aufgenommen werden kann, während er gleichzeitig die Wiedergabe der zweiten Anzeigevorrichtung 8 betrachtet.

Über die Datenverbindungen 10 bis 13 sind die beiden Bildaufnahmevorrichtungen 3 und 7 sowie die beiden Anzeigevorrichtungen 4 und 8 mit einer Verarbeitungseinheit 14 gekoppelt. Die Datenverbindungen 10 bis 13 können zumindest zum Teil Datenfernverbindungen, beispielsweise über das Internet, sein. Die Verarbeitungseinheit 14 kann bei der ersten Videokonferenzeinrichtung 2, der zweiten Videokonferenzeinrichtung 6 oder bei einem separaten Server angeordnet sein. Die Verarbeitungseinheit 14 kann bei der ersten oder zweiten Videokonferenzeinrichtung 2, 6 angeordnet sein. Ferner kann sie bei einem zentralen Server oder auch auf mehrere Server oder Verarbeitungseinheiten aufgeteilt seien, beispielsweise jeweils eine Verarbeitungseinheit für jeden Nutzer. Des Weiteren könnte die Verarbeitungseinheit 14 auf Einheiten bei der ersten und der zweiten Videokonferenzeinrichtung 2, 6 und optional einen separaten Server aufgeteilt seien, sodass bei der einen Videokonferenzeinrichtung die Aufnahme der Videobilddaten und bei der anderen Videokonferenzeinrichtung und/oder dem separaten Server die Verarbeitung der Videobilddaten erfolgt.

Ferner können auch statt der Videobilddaten nur Metadaten übertragen werden, aus denen dann erst die empfängerseitige zweite Videokonferenzeinrichtung 6 die anzuzeigenden Videobilddaten synthetisiert. Durch eine solche Kompression könnte die Bandbreite für die Datenübertragung gesenkt werden.

Wie in Fig. 2 gezeigt, betrachtet der erste Nutzer 5 mit einer Blickrichtung 16 ausgehend von der Position 15 mit einem seiner Augen einen Punkt auf der ersten Anzeigevorrichtung 4. Dabei kann die erste Bildaufnahmevorrichtung 3 den ersten Nutzer 5 aus einer Aufnahmerichtung 19 aufnehmen. Gleichzeitig kann die erste Anzeigevorrichtung 4 bei einer Videokonferenz Videobilddaten wiedergeben, welche von der zweiten Bildaufnahmevorrichtung 7 von dem Kopf des zweiten Nutzers 9 aufgenommen wurden. Dabei wird mindestens ein Auge des zweiten Nutzers 9 bei einer Position 17 von der ersten Anzeigevorrichtung 4 dargestellt.

Die Verarbeitungseinheit 14 ist ausgebildet, die von der ersten Bildaufnahmevorrichtung 3 aufgenommenen Videobilddaten zu empfangen und zu verarbeiten und die verarbeiteten Videobilddaten an die zweite Anzeigevorrichtung 8 der zweiten Videokonferenzeinrichtung 6 zu übertragen, so dass die zweite Anzeigevorrichtung 8 diese verarbeiteten Videobilddaten wiedergeben kann. In gleicher Weise ist die Verarbeitungseinheit 14 ausgebildet, die von der zweiten Bildaufnahmevorrichtung 7 aufgenommenen Videobilddaten zu empfangen und zu verarbeiten und die verarbeiteten Videobilddaten an die erste Anzeigevorrichtung 4 der ersten Videokonferenzeinrichtung 2 zu übertragen, welche die verarbeiteten Videobilddaten dann wiedergeben kann. Wie es im Folgenden mit Bezug zu den Ausführungsbeispielen der erfindungsgemäßen Verfahren erläutert wird, ist die Verarbeitungseinheit 14 dabei ausgebildet, bei der Verarbeitung der Videobilddaten die Blickrichtung 16 des dargestellten ersten Nutzers 5 zu erfassen und in den Videobilddaten die Wiedergabe eines die Augen umfassenden Bereichs 20 des Kopfes des ersten Nutzers 5 so zu verändern, dass eine Ziel-Blickrichtung des ersten Nutzers 5 in den veränderten Videobilddaten so erscheint, als wäre die erste Bildaufnahmevorrichtung 3 auf einer Geraden 18, die durch eines der Augen des ersten Nutzers 5 und durch eines der auf der ersten Anzeigevorrichtung 4 dargestellten Augen des zweiten Nutzers 9 geht.

Im Folgenden wird ein erstes Ausführungsbeispiel des erfindungsgemäßen Verfahrens erläutert, wobei des Weiteren die Ausbildung des erfindungsgemäßen Videokonferenzsystems, insbesondere der Verarbeitungseinheit 14, näher beschrieben wird.

In einem Schritt S1 wird der Kopf des ersten Nutzers 5 von der ersten Bildaufnahmevorrichtung 3 aufgenommen. Gleichzeitig werden in einem Schritt S2 von der ersten Anzeigevorrichtung 4 Videobilddaten wiedergegeben, welche eine Darstellung des Kopfes des zweiten Nutzers 9 umfassen. Diese Videobilddaten werden von der zweiten Bildaufnahmevorrichtung 7 aufgenommen und ggf. von der Verarbeitungseinheit 14 geändert. Die von der ersten Anzeigevorrichtung 4 angezeigten Videobilddaten zeigen ein Auge des zweiten Nutzers 9 bei der Position 17 (siehe Fig. 2).

In einem Schritt S3 werden die von der ersten Bildaufnahmevorrichtung 3 aufgenommenen Videobilddaten über die Datenverbindung 10 an die Verarbeitungseinheit 14 übertragen.

In einem Schritt S4 wird die Darstellung des Gesichts des ersten Nutzers 5 in den von der Verarbeitungseinheit 14 empfangenen Videobilddaten extrahiert.

In einem Schritt S5 wird die Blickrichtung des ersten Nutzers 5 anhand der extrahierten Darstellung des Gesichts erfasst. Es können hierfür an sich bekannte Eye-Tracking-Verfahren verwendet werden.

In einem Schritt S6 wird die aktuelle Position 17 der Darstellung eines Auges des zweiten Nutzers 9 auf der ersten Anzeigevorrichtung 4 ermittelt. Alternativ kann auch der Mittelpunkt zwischen der Darstellung der beiden Augen des zweiten Nutzers 9 als Punkt 17 bestimmt werden. Ferner wird die Ausrichtung der Geraden 18 berechnet, welche durch die Position 15 eines Auges der ersten Nutzers 5 und die Position 17 geht. Auch in diesem Fall könnte die Position 15 alternativ als der Mittelpunkt zwischen den beiden Augen des ersten Nutzers 5 definiert werden.

Anschließend wird in einem Schritt S7 eine Ziel-Blickrichtung für veränderte Videobilddaten in der Darstellung des ersten Nutzers 5 berechnet. Die Ziel-Blickrichtung wird dabei so bestimmt, dass der dargestellte erste Nutzer in den veränderten Videobilddaten so erscheint, als wäre die erste Bildaufnahmevorrichtung 3 auf der Geraden 18 angeordnet, insbesondere bei der Position 17 oder auf der Geraden 18 hinter der ersten Anzeigevorrichtung 4.

In einem Schritt S8 wird der aufgenommene, die Augen des ersten Nutzers 5 umfassende Bereich 20, wie in Fig. 4 gezeigt, in einem Blickrichtungsbereich 21, welcher die Darstellung beider Augen des ersten Nutzers 5 umfasst, und einen Restbereich 22 des extrahierten Gesichts des ersten Nutzers 5 aufgeteilt.

In einem Schritt S9 wird der Blickrichtungsbereich 21 in den zugehörigen Videobildteildaten so verändert, dass die von der Darstellung der Augen vorgegebene Blickrichtung 16 des ersten Nutzers 5 in den veränderten Videobildteildaten dieses Blickrichtungsbereichs 21 so erscheint, als wäre die erste Bildaufnahmevorrichtung 3 bei der Position 17 angeordnet. Hierfür können initial mehrere Bilder des ersten Nutzers 5 aufgenommen und gespeichert worden sein, bei denen der erste Nutzer 5 verschiedene Blickrichtungen 16 besitzt. Bei diesen initial aufgenommenen Bildern des ersten Nutzers 5 hat dieser die Pose seines Kopfes unverändert belassen und nur mit seinen Augen die Blickrichtung 16 verändert. Für die Veränderung der Videobildteildaten des Blickrichtungsbereichs 21 wird dann ein gespeichertes Bild ausgewählt, bei welchem die Blickrichtung der berechneten Ziel-Blickrichtung des ersten Nutzers 5 am nächsten kommt. Aus diesem gespeicherten Bild wird ein Blickrichtungsbereich extrahiert, welcher dem Blickrichtungsbereich 21 entspricht. Der Blickrichtungsbereich 21 wird dann durch den extrahierten Blickrichtungsbereich ersetzt. Alternativ können die veränderten Videobildteildaten des Blickrichtungsbereichs 21 auch durch Verfahren der künstlichen Intelligenz synthetisiert werden.

In einem Schritt S10 werden die veränderten Videobildteildaten des Blickrichtungsbereichs 21 wieder in den Restbereich 22 der Darstellung des Gesichts des ersten Nutzers 5 eingesetzt. Der Restbereich 22 mit den eingesetzten veränderten Videobildteildaten des BlickRichtungsbereichs 21 wird dann in einen weiteren Restbereich der Videobilddaten der ersten Bildaufnahmevorrichtung 3 eingesetzt, wodurch die veränderten Videobilddaten erzeugt werden.

In einem Schritt S11 werden von der Verarbeitungseinheit 14 die veränderten Videobilddaten über die Datenverbindung 13 an die zweite Anzeigevorrichtung 8 übertragen, welche die veränderten Videobilddaten wiedergibt. Diese können dann von dem zweiten Nutzer 9 betrachtet werden. Die Blickrichtung der Darstellung des ersten Nutzers 5 auf der zweiten Anzeigevorrichtung 8 erscheint dann in einer Weise, als wäre der zweite Nutzer 9 mit einem seiner Augen bei der Position 17 gegenüber dem ersten Nutzer 5. Es wird somit eine sehr realitätsnahe Darstellung des ersten Nutzers 5 auf der zweiten Anzeigevorrichtung 8 erzeugt. Wenn der erste Nutzer 5 in diesem Fall direkt auf die Darstellung eines Auges des zweiten Nutzers 9 bei der Position 17 blickt, ergibt sich auch bei der Darstellung des ersten Nutzers 5 auf der zweiten Anzeigevorrichtung 8 ein Blickkontakt mit dem zweiten Nutzer 9. Auch wenn die Blickrichtung 16 des ersten Nutzers 5 auf eine andere Position der ersten Anzeigevorrichtung 4 oder auch außerhalb der ersten Anzeigevorrichtung 4 gerichtet ist, wird diese Blickrichtung von der zweiten Anzeigevorrichtung 8 so wiedergegeben, als wäre die erste Bildaufnahmevorrichtung bei dem dargestellten Auge des zweiten Nutzers 9 angeordnet.

Bei einer anderen Ausgestaltung des ersten Ausführungsbeispiels des erfindungsgemäßen Verfahrens wird in Schritt S8 der Blickrichtungsbereich 21 noch, wie in Fig. 5 gezeigt, in einen ersten Teilbereich 23, der die Darstellung eines ersten Auges des ersten Nutzers 5 umfasst, und einem zweiten Teilbereich 24, der die Darstellung eines zweiten Auges des ersten Nutzers umfasst, unterteilt. Im Schritt S9 werden dann die Teilbereiche 23 und 24 so verändert, dass sich die Ziel-Blickrichtung des ersten Nutzers 5 ergibt.

Wie in Fig. 6 gezeigt, ist jeder Teilbereich 23 und 24 des Blickrichtungsbereichs 21 in eine Augenzone 25, eine Übergangszone 26 und eine Randzone 27 unterteilt. Die Augenzone 25 umfasst dabei die Darstellung der Pupille und der Iris des jeweiligen Auges des ersten Nutzers 5. Die Übergangszone 26 ist zwischen der Randzone 27 und der Augenzone 25 angeordnet. Im Schritt S9 wird die Augenzone 25 so verändert, dass sich die Ziel-Blickrichtung der Darstellung des ersten Nutzers 5 in den veränderten Videobilddaten der Augenzone 25 ergibt. Die Videobilddaten für die Darstellung der Randzone 27 wird nicht oder nur unwesentlich verändert, so dass sie sich nahtlos an die Darstellung benachbarter Bereiche des Blickrichtungsbereichs 21 bzw. des Restbereichs 22 anschließt. Die Videobilddaten für die Übergangszone 26 werden so verändert, dass sich ein Übergang von der veränderten Darstellung der Augenzone 25 zu der Darstellung in der Randzone 27 ergibt.

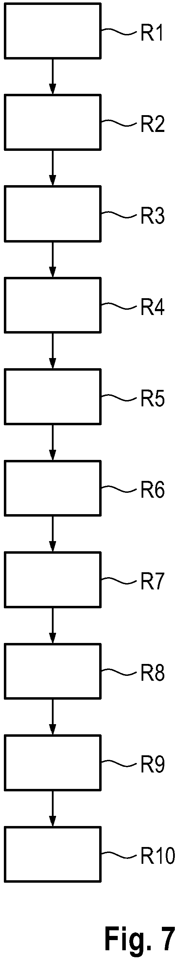

Im Folgenden wird ein zweites Ausführungsbeispiel des erfindungsgemäßen Verfahrens mit Bezug zu Fig. 7 beschrieben erläutert. In Verbindung mit dem zweiten Ausführungsbeispiel des erfindungsgemäßen Verfahrens wird eine alternative Ausgestaltung der Verarbeitungseinheit 14 gemäß einem zweiten Ausführungsbeispiel des erfindungsgemäßen Videokonferenzsystems 1 beschrieben:
Zunächst werden die Schritte R1 bis R7 ausgeführt, welche den vorstehend beschriebenen Schritten S1 bis S7 entsprechen.

In einem Schritt R8 wird die extrahierte Darstellung des Gesichts des ersten Nutzers 5 so analysiert, dass mittels des Gesichtsausdrucks ein Gefühlsausdruck des ersten Nutzers 5 erfasst wird. Dieser Gefühlsausdruck wird in der Verarbeitungseinheit 14 einer Gefühlsausdruck-Klasse zugeordnet.

In einem Schritt R9 werden die veränderten Videobilddaten des dargestellten ersten Nutzers 5 erzeugt, bei denen die Blickrichtung des ersten Nutzers 5 der Ziel-Blickrichtung entspricht. Hierfür wird bei dem zweiten Ausführungsbeispiel des erfindungsgemäßen Verfahrens ein Generative Adversarial Network (GAN) eingesetzt, welches in der Verarbeitungseinheit 14 implementiert ist. Dieses Generative Adversarial Network umfasst ein Generator-Netzwerk und eine Diskriminator-Netzwerk. Das Generator-Netzwerk erzeugt geänderte Videobilddaten. Das Diskriminator-Netzwerk bewertet eine Ähnlichkeit zwischen der Darstellung des Kopfes des ersten Nutzers 5 in den geänderten Videobilddaten, welche von dem Generator-Netzwerk erzeugt worden sind, und den von der ersten Bildaufnahmevorrichtung 3 aufgenommenen Videobilddaten. Des Weiteren bewertet das Diskriminator-Netzwerk eine Übereinstimmung zwischen der Blickrichtung des ersten Nutzers 5 in den geänderten Videobilddaten, welche von dem Generator-Netzwerk erzeugt wurden, und der Ziel-Blickrichtung. Das Diskriminator-Netzwerk gibt dem Generator-Netzwerk eine Rückkopplung, wobei geänderte Videobilddaten umso positiver bewertet werden, desto größer die Ähnlichkeit der Darstellung des Kopfes des ersten Nutzers in den geänderten Videobilddaten mit den aufgenommenen Videobilddaten ist und desto größer die Übereinstimmung der Blickrichtung des ersten Nutzers in den geänderten Videobilddaten mit der Ziel-Blickrichtung ist.

Des Weiteren bewertet das Diskriminator-Netzwerk eine Übereinstimmung zwischen der Gefühlsausdruck-Klasse der Darstellung des Kopfes des ersten Nutzers 5 in den geänderten Videobilddaten und der zugeordneten Gefühlsausdruck-Klasse der Darstellung des Kopfes des ersten Nutzers 5 in den aufgenommenen Videobilddaten. Je größer die Übereinstimmung ist, desto positiver ist die Bewertung des Diskriminator-Netzwerks. Auch diese Bewertung wird von dem Diskriminator-Netzwerk an das Generator-Netzwerk übergeben. In Abhängigkeit von den Bewertungen des Diskriminator-Netzwerks erzeugt das Generator-Netzwerk erneut in einem iterativen Prozess geänderte Videobilddaten. Auf diese Weise werden veränderte Videobilddaten erzeugt, bei denen eine große Ähnlichkeit der Darstellung des Kopfes mit den aufgenommenen Videobilddaten besteht, bei denen jedoch die Blickrichtung des ersten Nutzers der Ziel-Blickrichtung entspricht und bei denen der Gefühlsausdruck des ersten Nutzers in dieselbe Gefühlsausdruck-Klasse fällt, wie der Gefühlsausdruck des ersten Nutzers 5 in den aufgenommenen Videobilddaten.

In einem Schritt R10, welcher dem Schritt S11 des ersten Ausführungsbeispiels entspricht, werden die veränderten Videobilddaten an die zweite Anzeigevorrichtung 8 übertragen, welche sie wiedergibt.

Die von der ersten Bildaufnahmevorrichtung 3 aufgenommenen Videobilddaten sind in aufeinander folgende Videoframes unterteilt. Die Schritte der vorstehend beschriebenen Verfahren des ersten bzw. des zweiten Ausführungsbeispiels werden für jeden aufeinanderfolgenden Videoframe ausgeführt, so dass fortlaufende Videobilder erzeugt werden.

Bei dem ersten Ausführungsbeispiel des erfindungsgemäßen Verfahrens kann es sich dabei ergeben, dass durch die Veränderung der Videobilddaten in einem Restbereich, z. B. dem Restbereich 22, z. B. durch eine Drehung der Darstellung des Kopfes des ersten Nutzers 5, Bildelemente fehlen. Solche fehlenden Bildelemente können dann aus zuvor aufgenommenen Videoframes entnommen werden, welche den Inhalt dieser fehlenden Bildelemente zeigen und welche zumindest temporär hierfür gespeichert werden. Alternativ können solche fehlenden Bildelemente auch durch Verfahren der künstlichen Intelligenz synthetisiert werden.

Außerdem können sich bei der aufeinanderfolgenden Wiedergabe der Videoframes eine Darstellung von einer Blickrichtungsänderung, z. B. des ersten Nutzers 5, z. B. zu einem anderen Gesprächsteilnehmer ergeben. Eine solche Blickrichtungsänderung wird von der Verarbeitungseinheit 14 in den aufgenommenen Videobilddaten erkannt. In diesem Fall werden dann einige Videoframes so interpoliert, dass die von den veränderten Videobilddaten wiedergegebene Blickrichtungsänderung verlangsamt ist.

In einem weiteren Ausführungsbeispiel des erfindungsgemäßen Verfahrens, welches sowohl das erste als auch das zweite Ausführungsbeispiel ergänzen kann, wird im Schritt S5 bzw. R5 nicht nur die Blickrichtung 16 des ersten Nutzers 5 erfasst, sondern auch ermittelt, welches Objekt aktuell bei dem Schnittpunkt der Blickrichtung 16 mit der ersten Anzeigevorrichtung 4 dargestellt wird, sofern die Blickrichtung 16 auf die erste Anzeigevorrichtung 4 trifft. Dieses Objekt kann die Verarbeitungseinheit 14 anhand der Videobilddaten ermitteln, welche sie an die erste Anzeigevorrichtung 4 über die Datenverbindung 12 überträgt. Wenn ermittelt worden ist, dass das Objekt die Darstellung des Gesichts des zweiten Nutzers 9 ist, wird bei der Verarbeitung der Videobilddaten die Ziel-Blickrichtung des in den veränderten Videobilddaten dargestellten ersten Nutzers 5 so bestimmt, dass der erste Nutzer 5 das auf der ersten Anzeigevorrichtung dargestellte Gesicht des zweiten Nutzers in gleicher Weise betrachtet.

Wenn hingegen nicht ermittelt werden kann, welcher Bereich der Darstellung des Gesichts von dem ersten Nutzer 5 betrachtet wird, wird bei der Verarbeitung der Videobilddaten die Ziel-Blickrichtung des in den veränderten Videobilddaten dargestellten ersten Nutzers so bestimmt, dass der erste Nutzer 5 ein auf der ersten Anzeigevorrichtung 4 dargestelltes Auge des zweiten Nutzers 9 betrachtet.

Wenn in diesem Fall von der ersten Anzeigevorrichtung 4 Videobilddaten wiedergegeben werden, die mehrere Personen, z. B. mehrere zweite Nutzer, umfassen, wird bei diesem Ausführungsbeispiel unterschieden, welchen dieser dargestellten Nutzer der erste Nutzer 5 betrachtet. Die verschiedenen zweiten Nutzer können gemeinsam von der zweiten Bildaufnahmevorrichtung 7 oder von separaten zweiten Bildaufnahmevorrichtungen aufgenommen werden. Es wird dann ermittelt, ob das Objekt die Darstellung des Gesichts eines bestimmten der mehreren zweiten Nutzer ist. Bei der Verarbeitung der Videobilddaten erscheint die Ziel-Blickrichtung des in den veränderten Videobilddaten dargestellten ersten Nutzers dann so, als wäre die erste Bildaufnahmevorrichtung 3 auf der Geraden angeordnet, die durch eines der Augen des ersten Nutzers 5, d. h. durch die Position 15, geht und ferner durch eines der dargestellten Augen des bestimmten der mehreren zweiten Nutzer geht. Die Veränderung der Videobilddaten sorgt dafür, dass der dargestellte Gesprächspartner, auf den die Blickrichtung 16 des ersten Nutzers 5 gerichtet ist, sieht, dass er angeschaut wird, wohingegen die anderen zweiten Nutzer sehen, dass sie nicht angeschaut werden.

### Bezugszeichenliste

- 1: Videokonferenzsystem
- 2: erste Videokonferenzeinrichtung
- 3: erste Bildaufnahmevorrichtung
- 4: erste Anzeigevorrichtung
- 5: erster Nutzer
- 6: zweite Videokonferenzeinrichtung
- 7: zweite Bildaufnahmevorrichtung
- 8: zweite Anzeigevorrichtung
- 9: zweiter Nutzer
- 10: Datenverbindung
- 11: Datenverbindung
- 12: Datenverbindung
- 13: Datenverbindung
- 14: Verarbeitungseinheit
- 15: Position eines Auges des ersten Nutzers
- 16: Blickrichtung
- 17: Position der Darstellung eines Auges des zweiten Nutzers
- 18: Gerade
- 19: Aufnahmerichtung
- 20: aufgenommener, die Augen des ersten Nutzers umfassender Bereich
- 21: Blickrichtungsbereich
- 22: Restbereich
- 23: erster Teilbereich
- 24: zweiter Teilbereich
- 25: Augenzone
- 26: Übergangszone
- 27: Randzone

## Patentansprüche

1. Videokonferenzverfahren, bei dem
mit einer ersten Videokonferenzeinrichtung (2) erste Videobilddaten mittels einer ersten Anzeigevorrichtung (4) wiedergegeben werden und von einer ersten Bildaufnahmevorrichtung (3) zumindest ein die Augen umfassender Bereich des Kopfes eines ersten Nutzers (5) in einer Position aufgenommen wird, bei welcher der erste Nutzer (5) die von der ersten Anzeigevorrichtung (4) wiedergegebenen Videobilddaten betrachtet, wobei die von der ersten Anzeigevorrichtung (4) wiedergegebenen Videobilddaten zumindest eine Darstellung der Augen eines zweiten Nutzers (9) umfassen, die von einer zweiten Bildaufnahmevorrichtung (7) einer zweiten Videokonferenzeinrichtung (6) aufgenommen werden, die entfernt von der ersten Videokonferenzeinrichtung (2) angeordnet ist;
von einer Verarbeitungseinheit (14) die von der ersten Bildaufnahmevorrichtung (3) aufgenommenen Videobilddaten zumindest des die Augen umfassenden Bereichs des Kopfes des ersten Nutzers (5) empfangen und verändert werden und die veränderten Videobilddaten an eine zweite Anzeigevorrichtung (8) der zweiten Videokonferenzeinrichtung (6) übertragen und von dieser wiedergegeben werden, **dadurch gekennzeichnet, dass**
bei der Verarbeitung der Videobilddaten die Blickrichtung (16) des ersten Nutzers (5) erfasst wird und in den Videobilddaten zumindest die Wiedergabe des die Augen umfassenden Bereichs des Kopfes des ersten Nutzers (5) so verändert wird, dass eine Ziel-Blickrichtung des in den veränderten Videobilddaten dargestellten ersten Nutzers (5) so erscheint, als wäre die erste Bildaufnahmevorrichtung (3) auf einer Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des zweiten Nutzers (9) geht.

2. Videokonferenzverfahren nach Anspruch 1,
**dadurch gekennzeichnet, dass**
mittels der erfassten Blickrichtung (16) des ersten Nutzers (5) bestimmt wird, ob der erste Nutzer (5) einen Punkt der ersten Anzeigevorrichtung (4) betrachtet, und, wenn bestimmt wurde, dass ein Punkt der ersten Anzeigevorrichtung (4) betrachtet wird, ermittelt wird, welches Objekt aktuell bei diesem Punkt von der ersten Anzeigevorrichtung (4) dargestellt wird.

3. Videokonferenzverfahren nach Anspruch 2,
**dadurch gekennzeichnet, dass,**
wenn ermittelt worden ist, dass das Objekt die Darstellung des Gesichts des zweiten Nutzers (9) ist, bei der Verarbeitung der Videobilddaten die Ziel-Blickrichtung des in den veränderten Videobilddaten dargestellten ersten Nutzers (5) so erscheint, dass der erste Nutzer (5) das auf der ersten Anzeigevorrichtung (4) dargestellte Gesicht des zweiten Nutzers (9) betrachtet.

4. Videokonferenzverfahren nach Anspruch 2,
**dadurch gekennzeichnet, dass,**
wenn ermittelt worden ist, dass das Objekt die Darstellung des Gesichts des zweiten Nutzers (9) ist, jedoch nicht ermittelt wurde, welcher Bereich der Darstellung des Gesichts betrachtet wird, bei der Verarbeitung der Videobilddaten die Ziel-Blickrichtung des in den veränderten Videobilddaten dargestellten ersten Nutzers (5) so erscheint, dass der erste Nutzer (5) ein auf der ersten Anzeigevorrichtung (4) dargestelltes Auge des zweiten Nutzers (9) betrachtet.

5. Videokonferenzverfahren nach Anspruch 2,
**dadurch gekennzeichnet, dass**
die von der ersten Anzeigevorrichtung (4) wiedergegebenen Videobilddaten zumindest eine Darstellung der Augen mehrerer zweiter Nutzer (9) umfassen, die von der zweiten Bildaufnahmevorrichtung (7) und/oder weiteren zweiten Bildaufnahmevorrichtungen (7) aufgenommen werden,
ermittelt wird, ob das Objekt die Darstellung des Gesichts eines bestimmten der mehreren zweiten Nutzer (9) ist,
bei der Verarbeitung der Videobilddaten die Ziel-Blickrichtung des in den veränderten Videobilddaten dargestellten ersten Nutzers (5) so erscheint, als wäre die erste Bildaufnahmevorrichtung (3) auf der Geraden (18) angeordnet, die durch einen ersten Umgebungsbereich der Augen des ersten Nutzers und durch einen zweiten Umgebungsbereich der auf der ersten Anzeigevorrichtung (4) dargestellten Augen des bestimmten der mehreren zweiten Nutzer (9) geht.

6. Videokonferenzverfahren nach einem der vorhergehenden Ansprüche,
**dadurch gekennzeichnet, dass**
bei der Verarbeitung der Videobilddaten die veränderten Videobilddaten durch ein Generative Adversarial Network (GAN) mit einem Generator-Netzwerk und einem Diskriminator-Netzwerk erzeugt werden,
wobei das Generator-Netzwerk geänderte Videobilddaten erzeugt und das Diskriminator-Netzwerk eine Ähnlichkeit zwischen der Darstellung des Kopfes des ersten Nutzers (5) in den geränderten Videobilddaten und den aufgenommenen Videobilddaten bewertet sowie eine Übereinstimmung zwischen der Blickrichtung (16) des ersten Nutzers (5) in den geänderten Videobilddaten und der Ziel-Blickrichtung bewertet.

7. Videokonferenzverfahren nach Anspruch 6,
**dadurch gekennzeichnet, dass**
mittels der Verarbeitungseinheit (14) die von der ersten Bildaufnahmevorrichtung (3) aufgenommenen Videobilddaten, welche zumindest eine Darstellung des Kopfes des ersten Nutzers (5) umfassen, so analysiert werden, dass ein Gefühlsausdruck des ersten Nutzers (5) erfasst und einer oder mehreren Gefühlsausdruck-Klasse(n) zugeordnet wird,
das Diskriminator-Netzwerk ferner eine Übereinstimmung zwischen der/den Gefühlsausdruck-Klasse(n) der Darstellung des Kopfes des ersten Nutzers (5) in den veränderten Videobilddaten und der/den zugeordneten Gefühlsausdruck-Klasse(n) der Darstellung des Kopfes des ersten Nutzers (5) in den aufgenommenen Videobilddaten bewertet.

8. Videokonferenzverfahren nach einem der Ansprüche 1 bis 5,
**dadurch gekennzeichnet, dass**
bei der Verarbeitung der Videobilddaten ein Blickrichtungsbereich (21), der die Augen des ersten Nutzers (5) wiedergibt, aus einem Restbereich (22) extrahiert wird, wodurch Videobildteildaten erzeugt werden,
dieser Blickrichtungsbereich (21) in den Videobildteildaten danach so verändert wird, dass die von der Darstellung der Augen vorgegebene Blickrichtung (16) des ersten Nutzers (5) in den veränderten Videobildteildaten dieses Blickrichtungsbereichs (21) so erscheint, als wäre die erste Bildaufnahmevorrichtung (3) auf der Geraden (18) angeordnet, und dann die veränderten Videobildteildaten des Blickrichtungsbereichs (21) wieder in den Restbereich (22) der Videobilddaten eingesetzt werden, wodurch die veränderten Videobilddaten erzeugt werden.

9. Videokonferenzverfahren nach Anspruch 8,
**dadurch gekennzeichnet, dass**
der Blickrichtungsbereich (21) der Videobilddaten in einen ersten Teilbereich (23), der die Darstellung eines ersten Auges des ersten Nutzers (5) umfasst, und einen zweiten Teilbereich (24), der die Darstellung eines zweiten Auges des ersten Nutzers (9) umfasst, unterteilt ist.

10. Videokonferenzverfahren nach Anspruch 8,
**dadurch gekennzeichnet, dass**
der Blickrichtungsbereich (21) der Videobilddaten die Darstellung eines Kopfes des ersten Nutzers (5) umfasst und der Restbereich (22) einen Hintergrund der Darstellung des Kopfes umfasst.

11. Videokonferenzverfahren nach einem der Ansprüche 8 bis 10,
**dadurch gekennzeichnet, dass**
initial mehrere Bilder des ersten Nutzers (5) aufgenommen und gespeichert werden, bei denen der Blickrichtungsbereich (21) des ersten Nutzers (5) verschiedene Blickrichtungen (16) definiert, ohne dass die Pose des Kopfes des ersten Nutzers (5) verändert wird, und
die durch die Verarbeitung der Videobilddaten zu erzeugende veränderte Ziel-Blickrichtung des ersten Nutzers (5) mit den Blickrichtungen (16) der gespeicherten Bilder verglichen wird und ein Bild ausgewählt wird, bei welchem die Blickrichtung (16) der zu erzeugenden veränderten Ziel-Blickrichtung des ersten Nutzers (5) am nächsten kommt, und
bei der Verarbeitung der Videobilddaten das ausgewählte Bild verwendet wird, um die veränderten Videobildteildaten und/oder Videobilddaten zu erzeugen.

12. Videokonferenzverfahren nach einem der Ansprüche 8 bis 11,
**dadurch gekennzeichnet, dass**
der Blickrichtungsbereich (21) in eine Randzone (27), eine Augenzone (25), welche die Darstellung der Iris einschließlich der Pupille zumindest eines der Augen des ersten Nutzers (5) umfasst, und eine Übergangszone (26) zwischen der Randzone (27) und der Augenzone (25) umfasst,
bei der Verarbeitung der Videobilddaten der Blickrichtungsbereich (21) so verändert wird, dass die Augenzone (25) so verändert wird, dass die Blickrichtung (16) des ersten Nutzers (5) in den veränderten Videobilddaten der Augenzone (25) so erscheint, als wäre die erste Bildaufnahmevorrichtung (3) auf der Geraden (18) angeordnet, die Darstellung in der Randzone (27) nahtlos an die Darstellung benachbarter Bereiche des Restbereichs (22) anschließt und in der Übergangszone (26) die Videobilddaten so verändert werden, dass sich ein Übergang von der veränderten Darstellung in der Augenzone (25) zu der Darstellung in der Randzone (27) ergibt.

13. Videokonferenzverfahren nach einem der Ansprüche 8 bis 12,
**dadurch gekennzeichnet, dass**
von der ersten Bildaufnahmevorrichtung (3) aufeinander folgende Videoframes aufgenommen und zumindest temporär gespeichert werden und
bei der Verarbeitung der Videobilddaten fehlende Bildelemente des Restbereichs (22) aus gespeicherten Videoframes übernommen werden.

14. Videokonferenzverfahren nach einem der Ansprüche 8 bis 13,
**dadurch gekennzeichnet, dass**
von der ersten Bildaufnahmevorrichtung (3) aufeinander folgende Videoframes aufgenommen werden und
bei einer Blickrichtungsänderung des ersten Nutzers (5) bei der Verarbeitung der Videobilddaten einige Videoframes so interpoliert werden, dass die von den veränderten Videobilddaten wiedergegebene Blickrichtungsänderung verlangsamt ist.

15. Videokonferenzsystem (1) mit
einer ersten Videokonferenzeinrichtung (2), die eine erste Anzeigevorrichtung (4) und eine erste Bildaufnahmevorrichtung (3) aufweist, wobei die erste Bildaufnahmevorrichtung (3) angeordnet ist, zumindest einen die Augen umfassenden Bereich des Kopfes (20) eines ersten Nutzers (5) in einer Position aufzunehmen, bei welcher der erste Nutzer (5) die von der ersten Anzeigevorrichtung (4) wiedergegebenen Videobilddaten betrachtet,
einer zweiten Videokonferenzeinrichtung (6), die entfernt von der ersten Videokonferenzeinrichtung (2) angeordnet ist, die datentechnisch mit der ersten Videokonferenzeinrichtung (2) gekoppelt ist und die eine zweite Anzeigevorrichtung (8) zur Wiedergabe von Videobilddaten aufweist, die von der ersten Bildaufnahmevorrichtung (3) aufgenommen werden,
eine Verarbeitungseinheit (14), welche mit der ersten Bildaufnahmevorrichtung (3) gekoppelt ist und welche ausgebildet ist, die von der ersten Bildaufnahmevorrichtung (3) aufgenommenen Videobilddaten zu empfangen und zu verarbeiten und die verarbeiteten Videobilddaten an die zweite Anzeigevorrichtung (8) der zweiten Videokonferenzeinrichtung (6) zu übertragen,
**dadurch gekennzeichnet, dass**
die Verarbeitungseinheit (14) ausgebildet ist, bei der Verarbeitung der Videobilddaten die Blickrichtung (16) des dargestellten ersten Nutzers (5) zu erfassen, in den Videobilddaten die Wiedergabe zumindest des die Augen umfassenden Bereichs des Kopfes (20) des ersten Nutzers (5) so zu verändern, dass eine Ziel-Blickrichtung des ersten Nutzers (5) in den veränderten Videobilddaten so erscheint, als wäre die erste Bildaufnahmevorrichtung (3) auf einer Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des zweiten Nutzers (9) geht.
